# EUROPÄISCHE PATENTSCHRIFT

(11) **EP 0 857 166 B1**
(45) Veröffentlichungstag und Bekanntmachung des Hinweises auf die Patenterteilung: **17.01.2001**
(21) Anmeldenummer: 96934793.9
(22) Anmeldetag: 23.10.1996
(51) Int. Cl.: C04B 28/10, C04B 14/24, C04B 7/00, C04B 24/38

(54) **PUMPFÄHIGER LEICHTMAUERMÖRTEL DER KLASSE LM 21**
PUMPABLE CLASS LM 21 LIGHTWEIGHT MASONRY MORTAR
MORTIER DE FERMETURE LEGER DE CLASSE LM21 POUVANT ETRE POMPE

(30) Priorität: 28.10.1995 DE 19540273
(43) Veröffentlichungstag der Anmeldung: 12.08.1998
(73) Patentinhaber: Dennert Poraver GmbH, 92353 Postbauer-Heng (DE)
(72) Erfinder: PRUZINA, Christoph, D-65396 Walluf (DE)
(74) Vertreter: Hübner, Gerd, Dipl.-Phys.
(86) Internationale Anmeldenummer: EP9604597
(87) Internationale Veröffentlichungsnummer: WO9716392

(56) Entgegenhaltungen:
- EP-A- 0 144 965
- EP-A- 0 652 187
- GB-A- 1 105 623

## Beschreibung

Die Erfindung betrifft einen pumpfähigen Leichtmauermörtel der Klasse LM 21 insbesondere als Werk-Trockenmörtel.

Zum Hintergrund der vorliegenden Erfindung ist festzuhalten, daß im Zuge der seit 01.01.1995 in der Bundesrepublik Deutschland geltenden "Verordnung über einen energiesparenden Wärmeschutz bei Gebäuden" (= Wärmeschutzverordnung) bei Gebäuden mit normalen Innentemperaturen, also Wohngebäuden, Büro- und Verwaltungsgebäuden usw., der Wärmedurchgangskoeffizient der Außenwände maximal 0,50 W/(m²K) betragen darf. Aufgrund dieser Beschränkung gewinnt beim Mauerwerk der Außenwand das Wärmeleitverhalten der Mörtelschichten zwischen den Mauersteinen eine zunehmende Bedeutung. Um hier einen möglichst guten Wärmeschutz zu erreichen, kann einerseits die materialbedingte Wärmeleitfähigkeit des Mörtels und andererseits der Wärmeleitquerschnitt der Mörtelfugen, also praktisch deren Auftragsdicke, verringert werden.

Zur Verringerung der Wärmeleitfähigkeit des Mörtels wurden Leichtmauermörtel entwickelt, die aufgrund wärmedämmender Zuschlagstoffe z. B. in Form von Schaumglasgranulat gute Wärmedämmeigenschaften aufweisen. Nach DIN 1053 Teil 1 weist ein Leichtmauermörtel der Klasse LM 36 eine Wärmeleitfähigkeit ≤ 0,27 W/(mK) auf. Die maximale Trockenrohdichte eines solchen Mörtels darf 1,0 kg/dm³ nicht überschreiten. Ist dies der Fall, gilt die vorgenannte Anforderung an die Maximalwärmeleitfähigkeit des Mörtels ohne weiteren Nachweis als erfüllt.

Nach der DIN 1053 Teil 1 ist ferner ein Leichtmauermörtel der Klasse LM 21 spezifiziert, dessen maximale Wärmeleitfähigkeit bei 0,18 W/(mK) liegt. Die entsprechende maximale Trockenrohdichte beträgt 0,7 kg/dm³.

Ein derartiger Leichtmauermörtel der Klasse LM 21 ist aus der DE 295 05 781 U1 bekannt, wobei als Zuschlag ausschließlich ein feinporiges Rundgranulat aus Glas verwendet wird. Ferner ist ein Zusatzmittel vorgesehen, welches aus einem Stabilisator, einem Schaumpromotor und einem Mörtelverzögerer besteht. Das Mischungsverhältnis aus Zement Zuschlagstoff und Zusatzmittel soll 1 : 3,5 : 2,5 betragen.

Dieser bekannte Leichtmauermörtel der Klasse LM 21 ist laut der vorgenannten Druckschrift im Werk herzustellen und mit einem Transportbetonmischer zur Baustelle zu befördern, wo er in Mörtelkübeln zur Verarbeitung kellenfertig bereitgestellt werden kann. Nach DIN 1053 Teil 1, Anhang A.4.2 handelt es sich also um einen Werk-Frischmörtel.

Zu der eingangs erwähnten Verbesserung der Wärmedämmeigenschaften der Mörtelfugen ist es aus der EP 0 639 679 A2 bekannt, neben einem Leichtmörtel LM 21 in Normalfugendicke einen Dünnbettmörtel oder einen Mittelbettmörtel zu verwenden. Die Fugendicke beim Dünnbettmörtel beträgt in der Regel 1 bis 2 mm, wodurch an die Planizität der Mauersteine höchste Anforderungen zu stellen sind. Letztere sind daher nach dem eigentlichen Herstellungsvorgang mit einer Toleranz von weniger als 1 mm bezüglich ihrer Auflageflächen plan zu schleifen. Derartig aufwendig bearbeitete Mauersteine verteuern das Mauerwerk erheblich, weswegen die Dünnbettmörteltechnik aus ökonomischen Gründen nicht das Mittel der Wahl zur Verbesserung der Wärmedämmeigenschaften des Mauerwerks darstellt.

Aus der EP 0 652 197 A1 ist ein Putzmörtel mit hoher Wärmedämmfähigkeit bekannt, der auf der Basis von Schaumglasgranulat hergestellt ist. Er weist folgende Zusammensetzung auf:
- 25 bis 55 Gew.-% Schaumglasgranulat,
- 10 bis 25 Gew.-% Kalkhydrat
- 10 bis 50 Gew.-% hydraulisch erhärtende Bindemittel; zuzüglich weitere mineralische Zusatzstoffe und übliche chemische Zusatzmittel.

Bei dem in der EP 0 144 965 A2 angegebenen Putzmörtel ist Schaumglasgranulat mit Gewichtsanteilen zwischen 8 und 20 %, vorzugsweise 10 bis 12 % enthalten.

Aus der GB 1 105 623 A ist die Verwendung organischer Hilfsstoffe bei wärmedämmenden Mörteln grundsätzlich bekannt.

Im Zusammenhang mit dem in der EP 0 639 679 A1 angegebenen Mauerwerk in Mittelbettmörtelausführung, bei dem die Fugendicke ca. 6 mm beträgt, wird ohne nähere Spezifizierung ein Werktrockenmörtel der Klasse LM 36 nach DIN 1053 angegeben. Damit lassen sich einerseits die geschilderten Nachteile der Dünnbettmörteltechnik vermeiden, andererseits wird gegenüber einem Normalmörtelbett mit einer Fugendicke von ca. 12 mm ein erheblich verringerter Wärmeleitquerschnitt bei der Fuge erreicht. In Verbindung mit der Verwendung eines Leichtmörtels der Klasse LM 36, der als Wärmedämm-Mörtel einzustufen ist, wird also eine vorteilhafte Verbesserung der Wärmedämmfähigkeit des in der geschilderten Technik hergestellten Mauerwerkes erzielt.

Neben den durch die besagte Wärmeschutzverordnung einfließenden ökologischen Gesichtspunkten sind im Bauwesen grundsätzlich auch ökonomische Aspekte zu beachten und einschlägige Anforderungen an die Verarbeitbarkeit des Mörtels zu stellen. Diese verschiedenen Einflußgrößen wechselwirken miteinander, so daß beispielsweise die Wärmedämmfähigkeit des Mörtels nicht ins Extreme etwa durch Zugabe einer sehr großen Menge von Leichtzuschlag gesteigert werden kann, ohne damit andere Anforderungen an den Mörtel unerfüllbar zu machen. So wird beispielsweise die Festigkeit des Mörtels durch eine übermäßige Zugabe eines Leichtzuschlagstoffes unter das DIN-gerechte Maß abgesenkt, was grundsätzlich nicht zulässig ist.

Die vorstehend angesprochenen ökonomischen Aspekte bedingen beispielsweise ein möglichst rationelles Herstellen und Aufbringen des Mörtels. In dieser Hinsicht geht die Tendenz nachhaltig zum Anmischen eines Mörtels an der Baustelle durch Zusetzen von Wasser zu einem industriell hergestellten Werk-Trockenmörtel mit einer anschließenden Pumpförderung des auf verarbeitungsfertige Konsistenz eingestellten Mörtels zum jeweiligen Verarbeitungsort in einem Gebäude. Dort wird der Mörtel mittels einer Breitschlitzdüse auf die vorher gemauerte Steinlage aufgebracht.

Unter Zusammenfassung aller vorstehend erörterten wärmedämmtechnischen, ökonomischen und verarbeitungsstechnischen Aspekte ist also ein Mörtel anzustreben, der als Werk-Trockenmörtel industriell vorfertigbar, anschließend an der Baustelle durch Zugabe von Wasser auf Verarbeitungskonsistenz einstellbar und schließlich pumpfähig ist. Ferner soll der Mörtel vorzugsweise in Mittelbett-Technik durch einen Düsenauftrag auf das Mauerwerk aufgebracht werden können, um einerseits herkömmlich spezifizierte Mauersteine verwenden zu können, andererseits jedoch einen weiteren Beitrag zur Verminderung der Wärmeleitfähigkeit der Mörtelfuge zu leisten.

Wie problematisch die gleichzeitige Erfüllung der vorstehenden Anforderungen ist, soll anhand einiger Wechselwirkungsmechanismen bei der Verarbeitung eines solchen Mörtels erläutert werden:
- Damit der Mörtel über längere Strecken bis zu z.B. 40 m pumpbar bleibt, darf der Mörtel nicht zu dickflüssig eingestellt sein. Wird er in diesem Zusammenhang zu dünnflüssig eingestellt, so hat er jedoch im Auftragszustand nicht die notwendige Standfestigkeit, um nicht in das Lochbild der Mauersteine zu fallen. Die rheologischen Eigenschaften des Mörtels müssen also stimmen.
- Der Pumpendruck kann zum Fördern schwer pumpbarer Mörtel nicht beliebig erhöht werden, da dadurch die druckempfindlichen (da porösen) Leichtzuschlagstoffe zerstört werden könnten. Durch den Zusammenbruch der porösen Struktur der Leichtzuschlagstoffe erhöht sich dabei die Trockenrohdichte des Mörtels, so daß die für einen Mörtel z.B. der Klasse LM 21 geforderte Trockenrohdichte von maximal 0,7 kg/dm³, überschritten werden kann.
- Eine übermäßige Erhöhung des Pumpendruckes ist auch im Zusammenhang mit üblichen Leichtzuschlagstoffen, wie Blähschiefer, Bims oder Blähton-Granulat nicht möglich. Diese Leichtzuschlagstoffe sind nämlich offenporig, so daß sich bei einem erhöhten Pumpendruck das Anmachwasser des Mörtels in die Poren drückt. Der Mörtel wird dadurch steifer und könnte letztendes seine Pumpfähigkeit verlieren. Mit den erwähnten Leichtzuschlagstoffen hat es sich zudem grundsätzlich als schwierig erwiesen, eine Trockenrohdichte des Mörtels unter 0,8 kg/dm³ bei gleichzeitig ausreichendem Festigkeitsniveau zu erreichen.

Ausgehend von der geschilderten Problematik liegt nun der Erfindung die Aufgabe zugrunde, einen pumpfähigen Leichtmauermörtel der Klasse LM 21 zu schaffen, der insbesondere als Werk-Trockenmörtel herstellbar sein soll.

Diese Aufgabe wird durch die im Anspruch 1 angegebene Mindest-Zusammensetzung gelöst, wobei unter "Mindest-Zusammensetzung" zu verstehen ist, daß gegebenenfalls weitere Rezepturbestandteile eingesetzt werden, wie sie auch in den Unteransprüchen angegeben sind.

Der erfindungsgemäße Leichtmauermörtel setzt sich demnach zusammen aus (die Angabe der Masse% bezieht sich auf die Gesamt-Trockenmenge des Mörtels)
- hydraulisch erhärtendem Bindemittel in Form von Zement mit 40 bis 80 Masse%, vorzugsweise 50 bis 65 Masse%
- hydraulischem Bindemittel in Form von Kalkhydrat mit 5 bis 20 Masse%, vorzugsweise 6 bis 10 Masse%
- Leichtzuschlagstoff in Form von Schaumglasgranulat mit 10 bis 50 Masse%, vorzugsweise 15 bis 30 Masse%
- Celluloseether 0,1 bis 0,5 Masse%, vorzugsweise 0,15 bis 0,4 Masse%
- Luftporenbildner 0,01 bis 0,05 Masse%, vorzugsweise 0,04 bis 0,15 Masse% und
- einem Zuschlagstoff nach DIN 4226 mit einem Masseanteil von 1,0 bis 6,0 Masse%, vorzugsweise bis etwa 5 Masse%. Der Zuschlagstoff weist eine Korngröße von 0,2 mm bis 1,5 mm, vorzugsweise von 0,2 mm bis 1,0 mm, und/oder von 1,5 mm bis 6 mm, vorzugsweise von 2,0 bis 6,0 mm auf.

Wie Tests ergeben haben, ist ein Leichtmauermörtel mit dieser Zusammensetzung als Werk-Trockenmörtel herstellbar, an der Baustelle anmachbar und mit Pumpendrücken in der Größenordnung bis zu etwa 13 bar über eine Förderstrecke von bis zu 40 m pumpbar. Dabei erfüllt er hinsichtlich Trockenrohdichte und Wärmeleitfähigkeit die Anforderungen an einen Leichtmauermörtel der Klasse LM 21.

Die einzelnen Komponenten tragen dabei wie folgt zu den positiven Eigenschaften des erfindungsgemäßen Mörtels bei:
- Es muß nicht vertieft erörtert werden, daß der hydraulisch erhärtende Zement als Bindemittel für die Grundfestigkeit des ausgehärteten Mörtels dient.
- Kalkhydrat als hydraulisches Bindemittel - also Bindemittel, das in Anwesenheit von Wasser und Luft abbindet - dient aufgrund seiner in der Anmach- und Verarbeitungsphase gleichbleibenden Konsistenz zusätzlich als Gleitmittel und Wassertransportmittel. Damit wird die Pumpfähigkeit des Mörtels positiv beeinflußt.
- Das Schaumglasgranulat als Leichtzuschlagstoff dient zur Wärmedämmung. Im Zusammenhang mit der Pumpfähigkeit des erfindungsgemäßen Mörtels ist die Verwendung von Schaumglasgranulat anstatt der eingangs genannten anderen Leichtzuschlagstoffe vorteilhaft, da dieses Material geschlossenporig und insbesondere in einem Korngrößenbereich bis 2 mm eine hohe Hüllenstabilität aufweist. Durch die Geschlossenporigkeit kann das Anmachwasser des Mörtels auch unter Einfluß des Förderdruckes der Pumpe nicht in die Poren eindringen, wodurch die Konsistenz des Mörtels auch unter diesem Einfluß erhalten bleibt. Aufgrund der hohen Hüllenstabilität bleibt zudem die Granulatstruktur des Materials erhalten. Es tritt kein nennenswerter Zerkleinerungseffekt beim Fördern des Mörtels auf, wodurch die spezifizierte Trockenrohdichte des Mörtels zuverlässig erreicht wird.
- Der Celluloseether, insbesondere in niedrig- und mittelviskoser Einstellung, dient aufgrund seiner wasserbindenden Wirkung ebenfalls als Gleitmittel und zusätzlich als Mörtelverzögerer.
- Schließlich erniedrigt der weiterhin vorgesehene Luftporenbildner die Oberflächenspannung der Mörtelbestandteile und wirkt somit positiv auf die Fließfähigkeit des Mörtels beim Pumpen. Zusätzlich wird durch die Einführung von Luftporen in den Mörtel dessen Trockenrohdichte erniedrigt und das Wärmedämmverhalten verbessert.
- Der ferner vorgesehene Zuschlagstoff nach DIN 4226
   - also Quarzmehl, Quarzsand, Kalksteinsplit oder Kalksteinmehl - dient zur Festigkeitserhöhung des Mörtels und als Stützkorn zur Erzielung einer für Mittelbettmörtel repräsentativen Lagenfugendicke.

Nach Anspruch 2 wird in die Mörtel-Rezeptur zusätzlich geblähtes Perlit-Granulat eingemischt. Das geblähte Perlit-Granulat stellt dabei ebenfalls einen Leichtzuschlagstoff zur Verbesserung der Wärmedämmfähigkeit des Mörtels dar. Seine Hauptfunktion ist jedoch die eines Wasserspeichers für den Pumpvorgang. Perlit-Granulat ist nämlich offenporig mit der Spezialität daß sich die Poren drucklos beim Anmachen des Mörtels mit Wasser vollsaugen. Wird der Mörtel zum Pumpen nun mit dem Förderdruck beaufschlagt, so gibt das Perlit-Granulat Wasser ab und erhöht so die Fließfähigkeit des Mörtels.

Weiterhin dient das Perlit-Granulat aufgrund seiner inneren Struktur als zusätzliches Gleitmittel. Perlit-Granulat ist nämlich ein Schichtsilikat, das gewissermaßen "innere Gleitebenen" aufweist, die für die Verbesserung des Gleitvermögens sorgen.

Aufgrund des in Anspruch 3 angegebenen Korngrößenbereiches des Schaumglasgranulates von 0,5 mm bis 4,0 mm ist der erfindungsgemäße Leichtmauermörtel als Mittelbettmörtel verwendbar. Dessen Auftragsschichtdicke beträgt 5 bis 6 mm.

Schaumglasgranulat-Teilchen mit einem bevorzugten Korngrößenbereich zwischen 1,0 und 2 mm weisen eine besonders hohe Hüllenstabilität auf, so daß ein angemachter Mörtel mit derart spezifizierten Granulatteilchen mit besonders hohen Förderdrücken beaufschlagt - also über große Strecken gepumpt - werden kann.

Gemäß Anspruch 4 ist ein Blähglimmer-Granulat als weiterer Bestandteil des Mörtels vorgesehen, der ähnliche Eigenschaften wie der Perlit-Anteil aufweist.

Nach Anspruch 5 ist die Zugabe eines Dispersionspulvers mit einem Massenanteil von 0,1 bis 1,0 Masse% in die Rezeptur des erfindungsgemäßen Werk-Trockenmörtels vorgesehen. Dieses Dispersionspulver verbessert die Adhäsionshaftung des Mörtels an den der Mörtelfuge zugewandten Oberflächen der Mauersteine. Bei dem Dispersionspulver handelt es sich in der Regel um ein Polymerdispersionspulver.

Durch das nach Anspruch 6 vorgesehene Fließmittel in Form von Casein mit einem Massenanteil von 0,01 bis 0,1 Masse% werden die rheologischen Eigenschaften des Mörtels weiter verbessert. Die Pumpfähigkeit des Mörtels wird also positiv beeinflußt. Zudem wirkt das Casein verzögernd hinsichtlich der Mörtelabbindung.

Anspruch 7 kennzeichnet die Rohdichte des durch Zugabe von Wasser zu der erfindungsgemäßen Mörtelzusammensetzung angemachten Frischmörtels. Dadurch ist die Menge des zuzugebenden Wassers definiert. Hierbei ist zu ergänzen, daß die erfindungsgemäße Mörtelzusammensetzung in erster Linie als Werk-Trockenmörtel hergestellt und verarbeitet werden soll. Eine direkte Frischmörtelherstellung ist jedoch ebenfalls auf der Basis der angegebenen Rezeptur denkbar.

Gemäß Anspruch 8 beträgt der Luftgehalt des aus dem erfindungsgemäßen Leichtmauermörtel hergestellten Frischmörtels etwa 20 bis 40 Volumen%.

Nach Anspruch 9 beträgt die Rohdichte des abgebundenen Mörtels nach einer Standzeit von 28 Tagen zwischen 0,68 und 0,70 kg/dm³. Damit sind die DIN-Anforderungen an einen Leichtmauermörtel der Klasse LM 21 erfüllt.

Im folgenden wird die Erfindung anhand mehrerer Ausführungsbeispiele näher erörtert.

So geht aus der folgenden Aufstellung eine optimierte Zusammensetzung für einen pumpfähigen Mittelbett-Mauermörtel der Klasse LM 21 hervor. In dieser Aufstellung sind dabei unter "GT" Gewichtsteile und unter "M-%" Masse% zu verstehen.

| | **GT** | **M.%** |
|---|---|---|
| Hydraulisch erhärtendes Bindemittel (Zement) | 900 | 64,66 |
| Hydraulisches Bindemittel (Kalkhydrat) | 86 | 6,18 |
| Leichtzuschlag/Schaumglasgranulat 1,0 bis 2,0 mm im abgestuften Kornaufbau | 210 | 15,09 |
| Geblähtes Silikat (Perlite) | 120 | 8,62 |
| Leichtzuschlag Leca 2,0 bis 6,0 mm | 70 | 5,03 |
| Celluloseether | 3 | 0,22 |
| Dispersionspulver | 2,5 | 0,18 |
| Kasein | 0,3 | 0,02 |
| Tensid mit luftporeneinführender Wirkung | 0,18 | 0,01 |

Zu dieser optimierten Zusammensetzung ist festzuhalten, daß aufgrund der anwendungstechnischen Konditionen zur Erzielung einer Lagerfugendicke von 5 bis 6 mm ein sogenanntes "Stützkorn" mit zu verwenden ist. Dabei handelt es sich um einen Leichtzuschlag mit der Bezeichnung "Leca" nach DIN 4226, Teil 2 mit einer Korngröße zwischen 2,0 und 6,0 mm.

In der beigefügten Tabelle 1 sind ferner verschiedene Beispiele Nr. 1 bis 6 für die Zusammensetzung eines pumpfähigen Leichtmauermörtels der Klasse LM 21 als Werk-Trockenmörtel angegeben. Hierbei ist zu ergänzen, daß das geblähte Perlit-Granulat - also ein geblähtes Silikat - unter der Handelsbezeichnung "Perlite" von der Firma Perlite Dämmstoff, 44030 Dortmund, DE im Handel erhältlich ist. Das gegebenenfalls der Zusammensetzung beigefügte Blähglimmer-Granulat ist in der Tabelle als "geblähter Glimmer" bezeichnet und unter der Handelsbezeichnung "Vermiculite" von der Firma Deutsche Vermiculite Dämmstoff GmbH, 45549 Sprockhövel, DE im Handel erhältlich. Für den nichtporigen Zuschlag nach DIN 4226, Teil 1 wird vorzugsweise Quarzsand verwendet. Celluloseether wird unter dem Markennamen "Valocel" von der Firma Wolff Walsrode AG, 29655 Walsrode, DE vertrieben. Als Dispersionspulver kann ein Vinylacetat-Polymerpulver verwendet werden, das unter der Handelsbezeichnung "Vinnapas" von der Firma Wacker Chemie GmbH, 84480 Burghausen, DE erhältlich ist. Tenside mit luftporeneinführender Wirkung, wie sie als Luftporenbildner für den Mörtel ebenfalls vorgesehen sind, sind von der Firma Hoechst AG, 65174 Wiesbaden, DE beispielsweise unter dem Markennamen "Hostapur" erhältlich.

In der beigefügten Tabelle 1 stellen die Zahlenangaben zu den einzelnen Bestandteilen des Mörtels jeweils Gewichtsteile dar.

Die weiterhin beigefügte Tabelle 2 spiegelt Anwendungsfälle für verschiedene verarbeitungsfertige Leichtmauermörtel wieder, wie sie auf der Basis der Werk-Trockenmörtel gemäß den Beispielen 1 bis 6 nach Tabelle 1 angemacht wurden. Die verarbeitungsfertigen Mörtel wurden dabei unter Zugabe von Wasser in einem üblichen Durchlaufmischer hergestellt und mittels einer Schneckenpumpe durch Mörtelschläuche mit einem Durchmesser von 35 bzw. 50 mm über Förderstrecken zwischen 13 und 40 m gepumpt.

Alternativ dazu kann eine Mischpumpen-Maschine zur Aufbereitung und Förderung des Mörtels zum Einsatz kommen.

Aus den Angaben über die Standfestigkeit des Mörtels ("Konsistenz DIN-Tisch" in Tabelle 2), die Biegezug- und Druckfestigkeiten nach 28 Tagen und die Trockenmörtelrohdichte nach 28 Tagen wird erkennbar, daß die erfindungsgemäßen Leichtmauermörtel den DIN-Anforderungen für die Klasse LM 21 hinsichtlich Wärmedämmfähigkeit und Festigkeit genügen und darüber hinaus in pumpfähigem Zustand eine genügende Standfestigkeit aufweisen, um als Mittelbettmörtel verarbeitet zu werden. Dieser kann direkt durch eine Breitschlitzdüse am Schlauchende auf die vorher gesetzte Mauersteinlage aufgebracht werden.

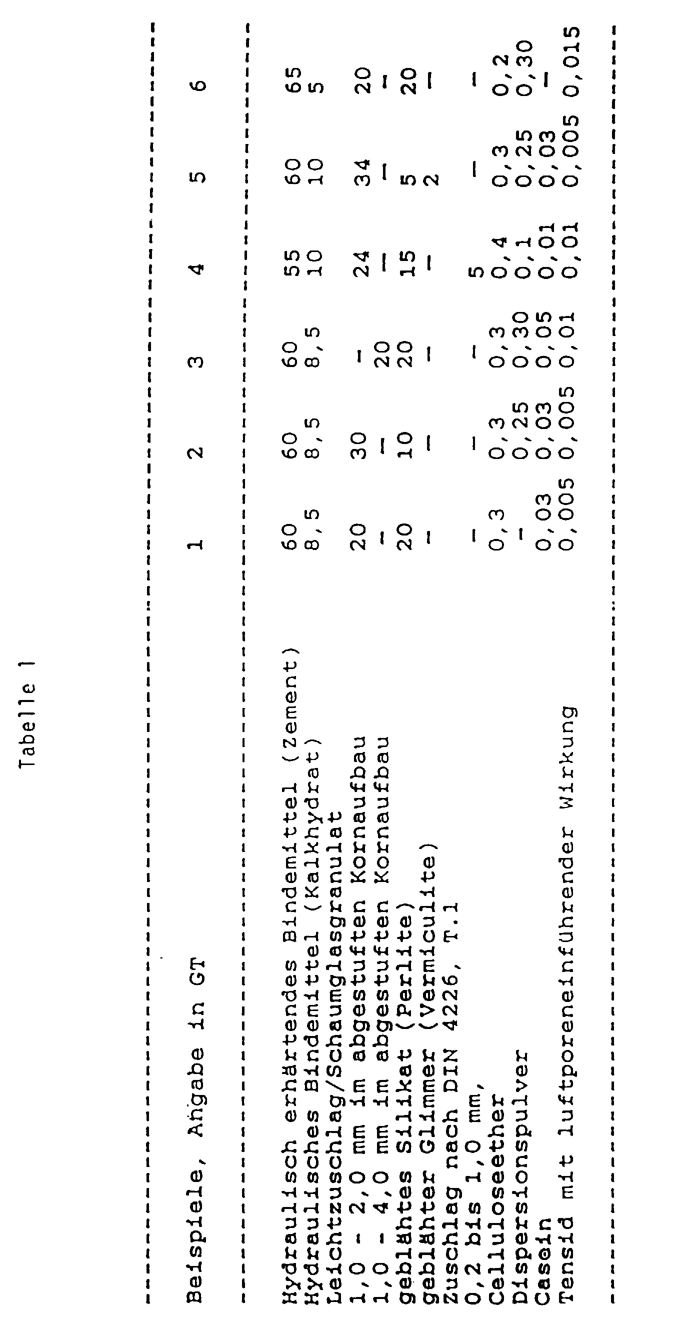

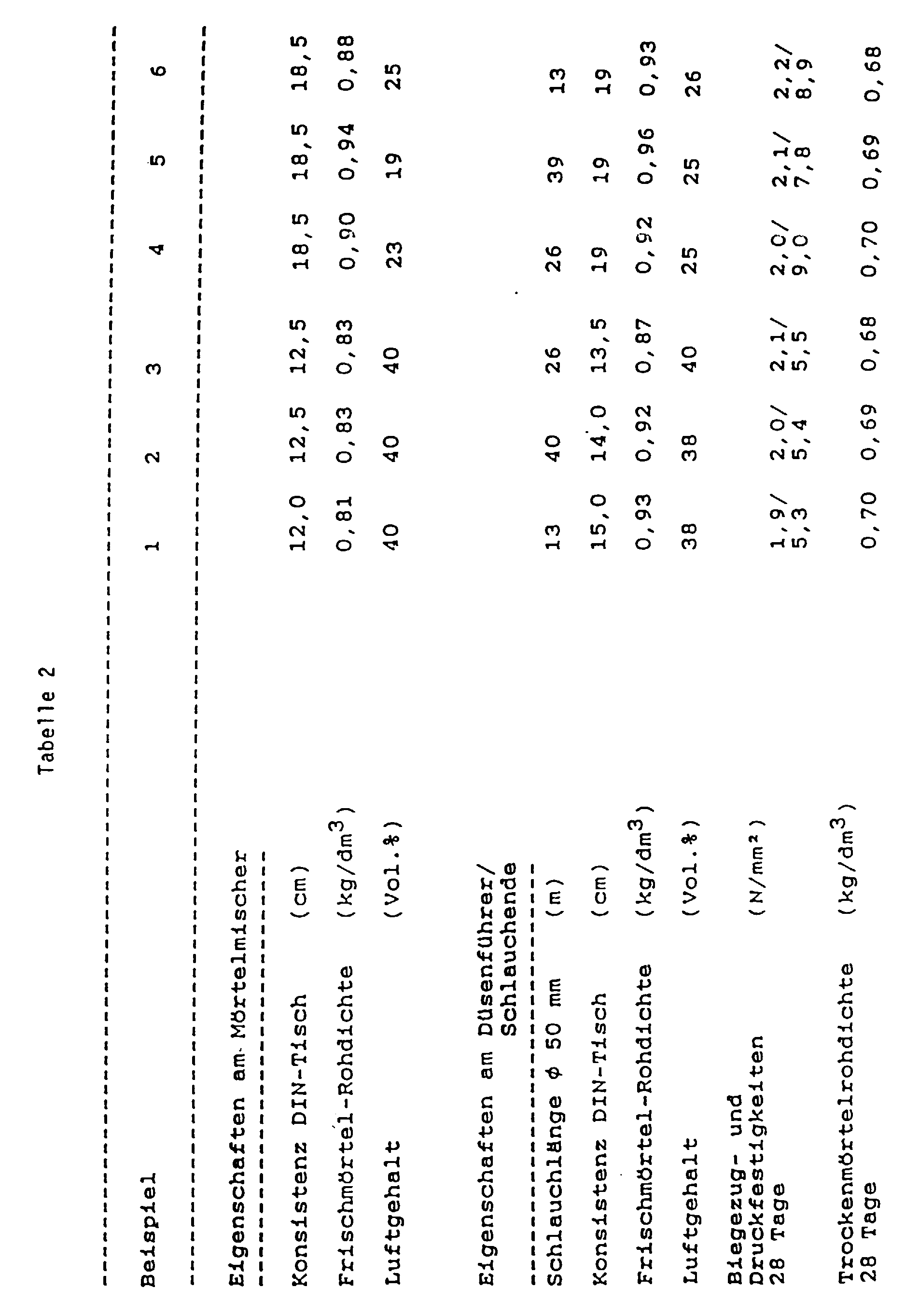

## Patentansprüche

1. Pumpfähiger Leichtmauermörtel der Klasse LM 21 insbesondere als Werk- Trockenmörtel, **gekennzeichnet durch** folgende Mindestzusammensetzung:
- hydraulisch erhärtendes Bindemittel in Form von Zement mit 40 bis 80 Masse%, vorzugsweise 50 bis 65 Masse%
- hydraulisches Bindemittel in Form von Kalkhydrat mit 5 bis 20 Masse%, vorzugsweise 6 bis 10 Masse%
- Leichtzuschlagstoff in Form von Schaumglasgranulat mit 10 bis 50 Masse%, vorzugsweise 15 bis 30 Masse%
- Celluloseether mit 0,1 bis 0,5 Masse%, vorzugsweise 0,15 bis 0,4 Masse%,
- Luftporenbildner mit 0,001 bis 0,05 Masse%, vorzugsweise 0,04 bis 0,015 Masse%, und einen Zuschlagstoff nach DIN 4226 mit einem Massenanteil von 1,0 bis 6,0 Masse%, vorzugsweise bis etwa 5 Masse%, wobei der Zuschlagstoff eine Korngröße von 0,2 mm bis 1,5 mm, vorzugsweise von 0,2 mm bis 1,0 mm und/oder eine Korngröße von 1,5 mm bis 6 mm, vorzugsweise von 2,0 bis 6,0 mm aufweist.

2. Leichtmauermörtel nach Anspruch 1, **gekennzeichnet durch** ein geblähtes Perlit-Granulat mit einem Masseanteil von 5 bis 20 Masse% als weiteren Bestandteile.

3. Leichtmauermörtel nach Anspruch 1 oder 2, **dadurch gekennzeichnet**, daß das Schaumglasgranulat eine Korngröße von 0,5 mm bis 4,0 mm, vorzugsweise von 1,0 mm bis 2,0 mm aufweist.

4. Leichtmauermörtel nach einem der Ansprüche 1 bis 3, **gekennzeichnet durch** ein Blähglimmer-Granulat mit einem Massenanteil von 0,5 bis 5,0 Masse% als weiteren Bestandteil.

5. Leichtmauermörtel nach einem der Ansprüche 1 bis 4, **gekennzeichnet durch** ein Dispersionspulver mit einem Massenanteil von 0,1 bis 1,0 Masse% als weiteren Bestandteil.

6. Leichtmauermörtel nach einem der Ansprüche 1 bis 5, **gekennzeichnet durch** ein Fließmittel in Form von Casein mit einem Massenanteil von 0,01 bis 0,1 Masse% als weiteren Bestandteil.

7. Leichtmauermörtel nach einem der Ansprüche 1 bis 6, **dadurch gekennzeichnet, daß** der Leichtmauermörtel durch Zugabe von Wasser im pumpfähigen Zustand eine Frischmörtel-Rohdichte zwischen 0,80 und 0,95 kg/dm³ aufweist.

8. Leichtmauermörtel nach Anspruch 7, **dadurch gekennzeichnet, daß** der Luftgehalt des aus dem Leichtmauermörtel hergestellten Frischmörtels zwischen etwa 20 und 40 Volumen% beträgt.

9. Leichtmauermörtel nach einem der Ansprüche 1 bis 8, **dadurch gekennzeichnet, daß** die Rohdichte des abgebundenen Mörtels nach einer Standzeit von 28 Tagen zwischen 0,68 und 0,70 kg/dm³ liegt.

## Claims

1. Pumpable class LM21 lightweight masonry mortar, in particular in the form of a factory-made dry mortar, **characterized by** the following minimum composition:
- between 40 to 80 mass %, preferably 50 to 65 mass %, hydraulically setting binder in the form of cement
- between 5 to 20 mass %, preferably 6 to 10 mass %, hydraulic binder in the form of calcium hydrate
- between 10 to 50 mass %, preferably 15 to 30 mass %, lightweight aggregate in the form of cellular glass granulate
- between 0.1 to 0.5 mass %, preferably 0.15 to 0.4 mass %, cellulose ether
- between 0.001 to 0.05 mass %, preferably 0.04 to 0.015 mass %, air void forming agent, and
- between 1.0 to 6.0 mass %, preferably to approximately 5 mass %, aggregate according to DIN 4226, the aggregate having a grain size of 0.2 mm to 1.5 mm, preferably of 0.2 mm to 1.0 mm, and/or a grain size of 1.5 mm to 6 mm, preferably of 2.0 to 6.0 mm.

2. Lightweight masonry mortar according to claim 1, **characterized by** an expanded perlite granulate of a mass percentage ranging from 5 to 20 mass % as further components.

3. Lightweight masonry mortar according to claim 1 or 2, **characterized in that** the cellular glass granulate has a grain size of 0.5 mm to 4.0 mm, preferably of 1.0 mm to 2.0 mm.

4. Lightweight masonry mortar according to one of claims 1 to 3, **characterized by** an expanded mica granulate of a mass percentage of 0.5 to 5.0 mass % as a further component.

5. Lightweight masonry mortar according to one of claims 1 to 4, **characterized by** a redispersible powder of a mass percentage ranging from 0.1 to 1.0 mass % as a further component.

6. Lightweight masonry mortar according to one of claims 1 to 5, **characterized by** a solvent in the form of casein of a mass percentage ranging from 0.01 to 0.1 mass % as a further component.

7. Lightweight masonry mortar according to one of claims 1 to 6, **characterized in that** by the addition of water, the lightweight masonry mortar, in the pumpable condition, has a fresh mortar gross density ranging between 0.80 and 0.95 kg/dm³.

8. Lightweight masonry mortar according to claim 7, **characterized in that** the air content of the fresh mortar produced from the lightweight masonry mortar ranges between approximately 20 and 40 volume %.

9. Lightweight masonry mortar according to one of claims 1 to 8, **characterized in that** after a dwell time of 28 days, the gross density of the cured mortar ranges between 0.68 and 0.70 kg/dm³.

## Revendications

1. Mortier de fermeture léger et pompable de la classe LM21, notamment en forme de mortier sec fabriqué à l'usine, **caractérisé par** la composition minimale suivante:
- liant de prise hydraulique en forme de ciment avec 40 à 80 % en masse, de préférence 50 à 65 % en masse
- liant hydraulique en forme d'hydrate de chaux avec 5 à 20 % en masse, de préférence 6 à 10 % en masse
- agrégats légers en forme de granulés de verre mousse avec 10 à 50 % en masse, de préférence 15 à 30 % en masse
- éther cellulosique avec 0,1 à 0,5 % en masse, de préférence 0,15 à 0,4 % en masse
- entraîneur d'air avec 0,001 à 0,05 % en masse, de préférence 0,04 à 0,015 % en masse, et
- agrégats selon DIN 4226 avec un pourcentage en masse de 1,0 à 6,0 % en masse, de préférence à environ 5 % en masse, les agrégats ayant une grosseur de grain de 0,2 mm à 1,5 mm, de préférence de 0,2 mm à 1,0 mm, et/ou une grosseur de grain de 1,5 mm à 6 mm, de préférence de 2,0 à 6,0 mm.

2. Mortier de fermeture léger selon la revendication 1, **caractérisé par** des granulés gonflés de perlite avec un pourcentage en masse de 5 à 20 % en masse comme constituants additionnels.

3. Mortier de fermeture léger selon la revendication 1 ou 2, **caractérisé en ce que** les granulés de verre mousse ont une grosseur de grain de 0,5 mm à 4,0 mm, de préférence de 1,0 mm à 2,0 mm.

4. Mortier de fermeture léger selon l'une quelconque des revendications 1 à 3, **caractérisé par** des granulés gonflés de mica avec un pourcentage en masse de 0,5 à 5,0 % en masse comme constituant additionnel.

5. Mortier de fermeture léger selon l'une quelconque des revendications 1 à 4, **caractérisé par** une poudre de dispersion avec un pourcentage en masse de 0,1 à 1,0 % en masse comme constituant additionnel.

6. Mortier de fermeture léger selon l'une quelconque des revendications 1 à 5, **caractérisé par** un solvant en forme de caséine avec un pourcentage en masse de 0,01 à 0,1 % en masse comme constituant additionnel.

7. Mortier de fermeture léger selon l'une quelconque des revendications 1 à 6, **caractérisé en ce que** le mortier de fermeture léger additionné d'eau, en état pompable, a une masse volumique apparente de mortier frais entre 0,80 et 0,95 kg/dm³.

8. Mortier de fermeture léger selon la revendication 7, **caractérisé en ce que** le volume d'air du mortier frais fabriqué à partir du mortier de fermeture léger s'élève à un montant entre 20 et 40 % de volume.

9. Mortier de fermeture léger selon l'une quelconque des revendications 1 à 8, **caractérisé en ce que** la masse volumique apparente du mortier pris, après une durée de 28 jours, est comprise entre 0,68 et 0,70 kg/dm³.
